# EUROPÄISCHE PATENTSCHRIFT

(11) **EP 0 682 822 B1**
(45) Veröffentlichungstag und Bekanntmachung des Hinweises auf die Patenterteilung: **23.10.1996**
(21) Anmeldenummer: 94901769.3
(22) Anmeldetag: 15.12.1993
(51) Int. Cl.: H01S 3/02

(54) **GASLASER**
GAS LASER
LASER A GAZ

(30) Priorität: 04.02.1993 DE 4303158
(43) Veröffentlichungstag der Anmeldung: 22.11.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: KLEIN, Jürgen, D-52064 Aachen (DE); OTTO, Gerhard, D-52072 Aachen (DE)
(86) Internationale Anmeldenummer: DE9301211
(87) Internationale Veröffentlichungsnummer: WO9418727

(56) Entgegenhaltungen:
- EP-A- 0 457 061
- DE-A- 4 119 027
- US-A- 3 571 749

## Beschreibung

Die Erfindung betrifft einen Gaslaser nach dem Oberbegriff des Anspruches 1.

Es ist bekannt, daß die Energiezufuhr in das Lasermedium mittels einer elektrischen Niederdruckgasentladung erfolgen kann. Da die maximal zulässige Gastemperatur durch die Kinetik des Laserprozesses begrenzt ist, muß der nicht zur Lasertätigkeit beitragende Energieanteil durch geeignete Maßnahmen abgeführt werden.

Bei Entladungen in ruhendem Gas erfolgt dies durch Wärmeleitung des ruhenden Lasermediums zur gekühlten Berandung des Entladungsrohres. Die Wirksamkeit dieses Prozesses begrenzt hierbei die maximal erreichbare Leistungsdichte und somit auch die erzielbare Laserleistung. Im Hochleistungsbereich werden darum überwiegend konvektiv gekühlte Laser eingesetzt, bei denen das Gas mittels einer Umwälzpumpe durch das Entladungsrohr geführt wird. In ihm wird die Gasentladung angeregt. Nach Verlassen des Entladungsrohres wird das Gas durch einen Kühler geleitet, in dem der überwiegende Teil der Verlustwärme abgegeben wird. Die elektrische Leistung ist durch die Auslegung des Gaskreislaufes sowie durch die Stabilität der Entladung begrenzt.

Die Energieeinkoppelung kann bei diesen bekannten Gaslasern über metallische Elektroden im Entladungsrohr mittels Gleichstrom oder kapazitiv durch die dielektrische Wandung des Entladungsrohres mittels Wechselstrom bei Frequenzen um einige zehn NHz erfolgen.

Bei einer transversalen hochfrequenzangeregten Anordnung wirkt das dielektrische Rohr als über die Länge und Breite der Gasentladung verteilter kapazitiver Vorwiderstand, der die Gasentladung homogenisiert. Nachteilig ist aber der im Vergleich zum Laserstrahl größere angeregte Querschnitt des Lasermediums. Zudem bilden sich an der Innenwandung des Entladungsrohres sogenannte Entladungsrandschichten. Die hier umgesetzte Energie kann für den Laserprozeß nicht genutzt werden, so daß der Gesamtwirkungsgrad dieses Gaslasers verringert wird. Da die Dicke dieser Randschichten mit abnehmender Anregungsfrequenz wächst, ist die Wirksamkeit der Anregung insbesondere im Frequenzbereich bis zu einigen hundert KHz vermindert, in dem kostengünstige Generatoren auf Halbleiterbasis verfügbar sind.

Da die Gleichstromanregung über Elektroden im Gasraum bei transversalem Stromfluß eine aufwendige Segmentierung der Elektroden erfordert, wird zumeist eine axiale Anordnung eingesetzt. Die Elektroden befinden sich hierbei innerhalb des Entladungsrohres nahe seinen beiden Enden und sind an eine Gleichstromquelle angeschlossen. Zwar wird bei einem solchen Gaslaser eine gute Überdeckung zwischen Laserstrahl und angeregtem Lasermediumvolumen erreicht, jedoch sind der Elektrodenabbrand, der das Lasermedium verschmutzt, und der begrenzte homogen anregbare Querschnitt nachteilig.

Es sind auch axial hochfrequenzangeregte Gaslaser bekannt, bei denen an eine Wechselstromquelle angeschlossene Ringelektroden auf der Außenwandung des Entladungsrohres sitzen, durch welches das Lasermedium strömt. Aufgrund der Reibung an der Innenseite des ungekühlten Entladungsrohres ist die Gasgeschwindigkeit verringert, so daß die Verweilzeit der Teilchen in dieser Randzone und somit die von ihnen aufgenommene Wärmemenge größer ist als im schnell durchströmten Bereich der Rohrachse. Dadurch erhöht sich die Temperatur des Lasermediums, wodurch eine geringere Teilchendichte auftritt. Als Folge hiervon verringert sich der volumenspezifische elektrische Widerstand. Darum können in diesen Bereichen Bogenentladungen in Strömungsrichtung entstehen. Die Einsatzschwelle solcher Bögen kann zwar zu etwas höheren Leistungsdichten verschoben werden, indem eine turbulente Strömung des Lasermediums erzwungen wird. Jedoch ist neben dem hierfür erforderlichen zusätzlichen konstruktiven Aufwand ein erhöhter Druckverlust und die Auswirkung der turbulenten Strömung auf die optischen Eigenschaft des Lasermediums nachteilig, die zu Fluktuationen in der Intensitätsverteilung des Laserstrahles führen.

Der Erfindung liegt die Aufgabe zugrunde, einen von Lasermedium durchströmten Gaslaser so auszubilden, daß er bei einfacher Ausbildung und geringen Betriebskosten eine hohe Leistung sowie eine hohe Stabilität der Entladung gewährleistet.

Diese Aufgabe wird beim gattungsgemäßen Gaslaser erfindungsgemäß mit den kennzeichnenden Merkmalen des Anspruches 1 gelöst.

Bei der erfindungsgemäßen Ausbildung wird das Entladungsrohr außenseitig durch das Kühlmedium gekühlt. Die im Randbereich des Entladungsrohres entstehende Verlustwärme wird über die Wandung des Entladungsrohres an das Kühlmedium abgeführt, so daß eine übermäßige Erwärmung des Lasermediums und damit die Entstehung von Bogenentladungen sicher verhindert wird. Da das Kühlmedium durch den Ringraum strömt, wird ständig neues, kühleres Kühlmedium an die Wandung des Entladungsrohres herangeführt, so daß eine optimale Kühlung des Entladungsrohres gewährleistet ist. Damit kann auch bei laminarer Strömung des Lasermediums im Entladungsrohr die Bildung von Bögen in der Nähe der Innenwandung des Entladungsrohres zuverlässig unterdrückt werden. Der erfindungsgemäße Gaslaser zeichnet sich durch eine kostengünstige Entladungsstruktur aus. Er hat eine hohe Leistung und benötigt für die Stromversorgung nur geringe Kosten. Da sich die Elektroden außerhalb des Ringraumes auf dem zweiten Rohr befinden, wird das Lasermedium nicht durch Elektrodenabbrand verunreinigt. Der erfindungsgemäße Gaslaser gewährleistet eine hohe Stabilität der Entladung. Infolge der erfindungsgemäßen Ausbildung können kostengünstige und dennoch hocheffektive und zuverlässige Laserstrahlquellen hergestellt werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in schematischer Darstellung und im Querschnitt einen erfindungsgemäßen Gaslaser,
- Fig. 2: in vergrößerter Darstellung einen Schnitt durch eine zweite Ausführungsform eines Entladungsrohres des erfindungsgemäßen Gaslasers.

Der Gaslaser hat ein Entladungsrohr 1, durch das axial ein Lasermedium 2 strömt. Im Entladungsrohr 1 findet in bekannter Weise die Gasentladung statt. Das Entladungsrohr 1 hat vorzugsweise kreisförmigen Querschnitt, so daß optimale Strömungs- und Entladungsverhältnisse gewährleistet sind. Das Lasermedium 2 wird in einem Kreislauf durch das Entladungsrohr 1 geführt. An das Eintrittsende 3 des Entladungsrohres 1 ist eine Gaseintrittskammer 4 angeschlossen, die an ihrer dem Eintrittsende 3 gegenüberliegenden Seite einen Resonatorspiegel 5 aufweist. In die Eintrittskammer 4 mündet eine Leitung 6, welche die Gaseintrittskammer 4 mit einer Gasaustrittskammer 7 am anderen Ende 8 des Entladungsrohres 1 verbindet. Die dem Austrittsende 8 gegenüberliegende Seite der Austrittskammer 7 ist mit einem weiteren Resonatorspiegel 9 verbunden, der dem Resonatorspiegel 5 gegenüberliegt. Die beiden Resonatorspiegel 5, 9 bilden den Resonator des Gaslasers.

Um das Lasermedium 2 im Kreislauf zu führen, sitzt im Ausführungsbeispiel in der Leitung 6 eine Gasumwälzpumpe 10. Mit ihr wird das Lasermedium im Kreislauf durch das Entladungsrohr 1 und die Leitung 6 geführt.

Der bei der Gasentladung erzeugte Laserstrahl ist mit 11 bezeichnet. Er tritt über einen der Resonatorspiegel 5 oder 9 nach außen.

Im Bereich zwischen den beiden Kammern 4 und 7 ist das Entladungsrohr 1 mit Abstand von einem zweiten Rohr 12 umgeben. Zwischen den beiden Rohren 1 und 12 wird dadurch ein Ringraum 13 gebildet, in dem sich ein Kühlmedium 14, vorzugsweise eine Kühlflüssigkeit, befindet. Bei entsprechenden Anwendungen kann als Kühlmedium 14 ein geeignetes Gas eingesetzt werden. Es dient dazu, die Wandung des Entladungsrohres 1, die sich bei der Gasentladung erwärmt, zu kühlen. Das Kühlmedium 14 hat eine geringe elektrische Leitfähigkeit, etwa im Bereich von einigen µs/cm. Hierzu ist das Rohr 12 nahe dem einen Ende mit einem Zulauf 15 und nahe dem anderen Ende mit einem Ablauf 16 versehen. Das Kühlmedium 14 kann in gleicher Weise wie das Lasermedium 2 im Kreislauf geführt sein, um die Betriebskosten gering zu halten. Es ist aber selbstverständlich auch möglich, über den Zulauf 15 ständig neues Kühlmedium 14 zuzuführen. Hierbei können das Lasermedium 2 und das Kühlmedium 14 jeweils die gleiche Strömungsrichtung haben. Es ist aber auch möglich, daß das Kühlmedium 14 im Ringraum 13 entgegengesetzt zum Lasermedium 2 im Entladungsrohr 1 strömt.

Auf dem äußeren Rohr 12 sind drei Ringelektroden 17 bis 19 angebracht, zwischen denen die Spannung eines Wechselstromgenerators 20 angelegt wird. Mit den Ringelektroden 17 bis 19 erfolgt eine axiale, kapazitive Einkoppelung der Energie in das Lasermedium 2 durch die Wandungen der beiden Rohre 1 und 12 sowie durch das Kühlmedium 14.

Bei der beschriebenen und dargestellten axialen, dielektrisch hochfrequenzangeregten Ausbildung wird die Wandung des Entladungsrohres 1 gekühlt. Die oben beschriebene Bogenbildung wird infolge der beschriebenen Ausbildung des Gaslasers zuverlässig vermieden, da das Kühlmedium 14 die im Randbereich der Entladung entstehende und durch Wärmeleitung zur Rohrwand transportierte Wärme aufnimmt und infolge seiner Strömung rasch abführt. Der volumenspezifische elektrische Widerstand sinkt darum auch im Randbereich einer laminaren Strömung nicht oder nur unwesentlich ab, so daß Bogenentladungen in Strömungsrichtung nicht entstehen können.

Die Elektroden 17 bis 19 befinden sich außerhalb des Entladungsraumes, so daß eine Verschmutzung des Lasermediums 2 durch Elektrodenabbrand nicht auftreten kann. Bei der kapazitiven Anregung ist auch eine homogene Anregung großer Querschnitte mit hoher Leistungsdichte möglich.

Ein bestimmter Anteil der während der Gasentladung auftretenden abzuführenden Verlustwärme wird noch innerhalb des Entladungsrohres 1 über die Rohrwandung an das Kühlmedium 14 abgeführt, so daß die Gasumwälzpumpe 10 im Gaskreislauf entsprechend kostengünstig dimensioniert werden kann.

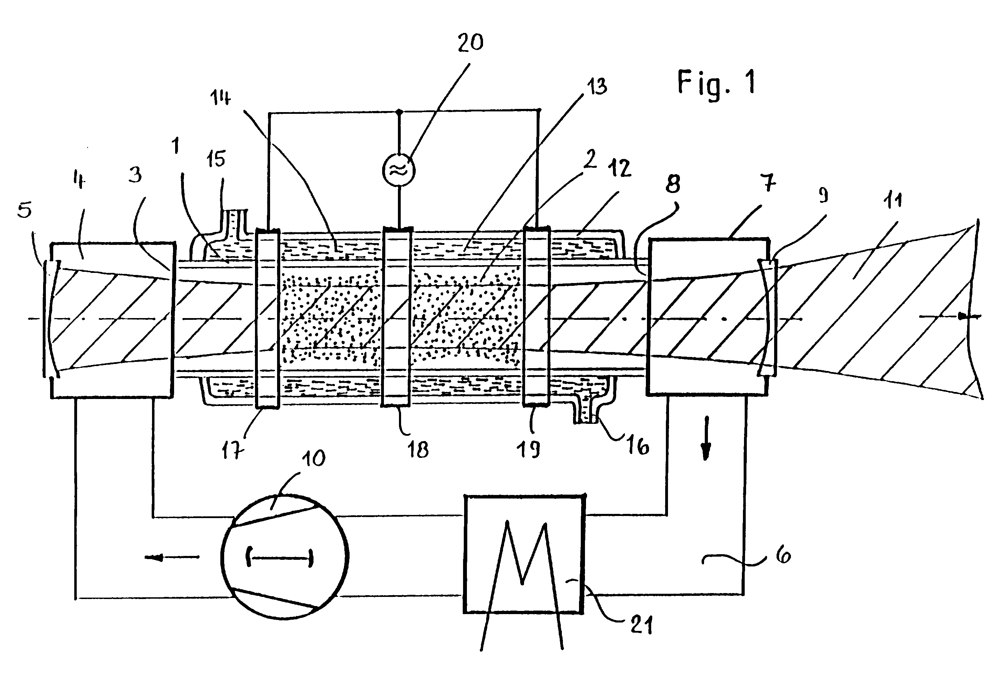

Wie Fig. 1 zeigt, befindet sich im Gaskreislauf in der Leitung 6 in Strömungsrichtung vor der Gasumwälzpumpe 10 noch ein Wärmetauscher 21, durch den das aus der Kammer 7 strömende Lasermedium 2 gekühlt wird. Der Wärmetauscher 21 kann ein Gas-Wasser-Wärmetauscher sein, so daß die im Lasermedium enthaltene Energie optimal zur Erwärmung von Wasser genutzt werden kann. Da ein Teil des Lasermediums schon innerhalb des Entladungsrohres 1 mittels des Kühlmediums 14 gekühlt wird, kann auch der Wärmetauscher 21 kostengünstig dimensioniert werden.

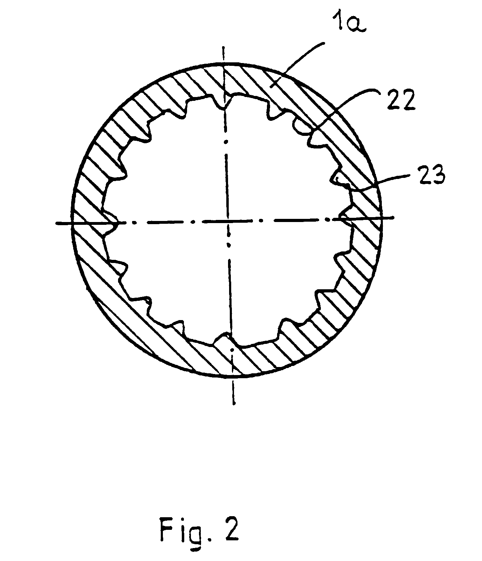

Um den Wärmeübergang vom Lasermedium 2 über die Wandung des Entladungsrohres 1 zum Kühlmedium 14 zu verbessern, kann die Innenwandung 22 des Entladungsrohres la durch entsprechende Profilgebung vergrößert werden (Fig. 2). Durch diese Oberflächenvergrößerung wird der Wärmeübergang erhöht. Beispielsweise kann die Innenwandung 22 mit über den Umfang vorzugsweise gleichmäßig verteilt angeordneten Rippen 23 versehen sein, die sich in Strömungsrichtung des Lasermediums 2 erstrecken. Dadurch wird die laminare Strömung des Lasermediums durch die Rippen 23 nicht beeinträchtigt. Anstelle der Rippen 23 können auch andere Formgebungen an der Innenwandung des Entladungsrohres vorgesehen sein.

Der Anteil der Randschichten des Lasermediums am Entladungsvolumen ist verhältnismäßig gering, so daß die hier umgesetzte Energie, die für den Laserprozeß nicht genutzt werden kann, entsprechend klein ist. Der Gesamtwirkungsgrad des beschriebenen Gaslasers ist darum hoch. Darum können auch kostengünstige Generatoren mit niedriger Frequenz und dennoch hoher Leistung zur Anregung eingesetzt werden.

Als Kühlmedium 14 wird bevorzugt demineralisiertes Wasser eingesetzt.

## Patentansprüche

1. Konvektiv gekühlter Gaslaser mit einem Entladungsrohr (1,1a), das von Lasermedium (2) durchströmt ist, das über außerhalb des Entladungsrohres befindliche Elektroden (17 bis 19) dielektrisch anregbar ist,
dadurch gekennzeichnet, daß das Entladungsrohr (1, la) von einem zweiten Rohr (12) mit Abstand umgeben ist, daß der Ringraum (13) zwischen dem Entladungsrohr (1, 1a) und dem zweiten Rohr (12) von Kühlme-dium (14) mit geringer elektrischer Leitfähigkeit durchströmt ist, und daß die Elektroden (17 bis 19) außerhalb des Ringraumes (13) auf dem zweiten Rohr (12) sitzen.

2. Gaslaser nach Anspruch 1,
dadurch gekennzeichnet, daß das Kühlmedium (14) und das Lasermedium (2) entgegengesetzte Strömungsrichtung haben.

3. Gaslaser nach Anspruch 1 oder 2,
dadurch gekennzeichnet, daß die Innenwandung (22) des Entladungsrohres (1a) mit Erhöhungen (23) bzw. Vertiefungen versehen ist.

4. Gaslaser nach Anspruch 3,
dadurch gekennzeichnet, daß sich die Erhöhungen (23) bzw. Vertiefungen in Strömungsrichtung des Lasermediums (2) erstrecken.

5. Gaslaser nach Anspruch 3 oder 4,
dadurch gekennzeichnet, daß sich die Erhöhungen (23) bzw. Vertiefungen über die gesamte Länge des Entladungsrohres (1a) erstrecken.

## Claims

1. Gas laser cooled by convection, comprising a discharge tube (1, 1a) through which the laser medium flows which may be dielectrically excited via electrodes (17 to 19) disposed outside said discharge tube,
**characterized** in that said discharge tube (1, 1a) is surrounded by a second tube (12) spaced therefrom, that a cooling medium (14) of low electric conductivity flows through the annular space (13) between said discharge tube (1, 1a) and said second tube (12), and that said electrodes (17 to 19) are located outside said annular space (13) on said second tube (12).

2. Gas laser according to Claim 1,
**characterized** in that said cooling medium (14) and said laser medium (2) have flow directions in opposition to each other.

3. Gas laser according to Claim 1 or 2,
**characterized** in that the interior wall (22) of said discharge tube (1a) is provided with protrusions (23) or recesses, respectively.

4. Gas laser according to Claim 3,
**characterized** in that said protrusions (23) or recesses, respectively, extend along the flow direction of said laser medium.

5. Gas laser according to Claim 3 or 4,
**characterized** in that said protrusions (23) or recesses, respectively, extend over the entire length of said discharge tube (1a).

## Revendications

1. Laser à gaz, refroidi par convection, comprenant un tube à décharge (1, 1a), à travers duquel s'écoule le milieu laser, qui peut être excité, de façon diélectrique, via des électrodes électrodes (17 à 19) disposées en dehors dudit tube à décharge,
**caractérisé** en ce que ledit tube à décharge (1, 1a) est entouré par un deuxième tube (12) en écarté, en ce qu'un milieu refroidisseur (14), à basse conduction électrique, s'écoule par l'espace annulaire (13) entre ledit tube à décharge (1, 1a) et ledit deuxième tube (12), et en ce que lesdites électrodes (17 à 19) se trouvent en dehors dudit espace annulaire (13) sur ledit deuxième tube (12).

2. Laser à gaz selon la revendication 1,
**caractérisé** en ce que ledit milieu refroidisseur (14) et ledit milieu laser (2) présentent des sens d'écoulement l'un inverse à l'autre.

3. Laser à gaz selon la revendication 1 ou 2,
**caractérisé** en ce que la paroi intérieure (22) dudit tube à décharge (1a) est prévue des bosses (23) ou respectivement des creux.

4. Laser à gaz selon la revendication 3,
**caractérisé** en ce que lesdits bosses (23) ou respectivement creux s'étendent le long du sens direction d'écoulement dudit milieu laser.

5. Laser à gaz selon la revendication 3 ou 4,
**caractérisé** en ce que lesdits bosses (23) ou respectivement creux s'étendent sur toute la longueur dudit tube à décharge (1a).
